(19)

Europäisches
Patentamt
European
Patent Office
Office européen
des brevets

(11) **EP 2 088 774 A1**

(12) **EUROPEAN PATENT APPLICATION**

(43) Date of publication:
**12.08.2009 Bulletin 2009/33**

(51) Int Cl.:
*H04N 5/44* (2006.01)   *G06T 3/40* (2006.01)

(21) Application number: **09152348.0**

(22) Date of filing: **09.02.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **11.02.2008  TR 200800856**

(71) Applicant: **Vestel Elektronik Sanayi ve Ticaret A.S.**
**45030 Manisa (TR)**

(72) Inventor: **Gökkaya, Utku**
**34 Istanbul (TR)**

(74) Representative: **Cayli, Hülya**
**Paragon Consultancy Inc.**
**Koza Sokak No: 63/2**
**GOP**
**06540 Ankara (TR)**

(54) **Adaptive scaling method for an entertainment system**

(57)    The displayed videos may have graphical portions and/or text portions regarding to a displayed show; a user watching such show may wish entertainment system to scale his/her area of interest automatically. The present invention provides adaptive scaling of video frames in relation with motion presence and user preferences.

Figure – 2

EP 2 088 774 A1

## Description

### Technical Field

This invention is related to a method for improving picture quality and for adaptive scaling of frames displayed by an entertainment system.

### Prior Art

Within recent years, there has been an increasing demand in the entertainment market for providing features within television receivers and display systems for improving perceived picture quality. A displayed video signal is consistent of several video frames, and during watching a video over display systems, the most important part for human eye is the moving parts within such frames. Nowadays, by the features provided by display devices, like LCD (liquid crystal display) television sets, a moving object within a video can automatically be detected for several purposes.

The displayed videos may have graphical portions and/or text portions regarding to a displayed show; a user watching such display systems may intend to manually scale (zoom) some of those portions or fields within displayed videos in order to improve perceived image quality; this feature provides users an ease to read subtitles or to zoom to a portion of displayed video, which portion is supposed to be centre of interest by that individual user.

A prior art technique was disclosed by the patent application US2002/0075318 which basically receives data associated with a show and provides user to select at least one feature to scale and does the scaling accordingly. The operation principle of stated prior art is summarized within Figure-1, where user selects an area to be scaled within a displayed video via remote controller and scaling parameters are set accordingly.

Within the prior art systems, scaling a portion of a displayed video is always dependent to user selections, where users are supposed to manually designate objects/fields within displayed video in order to provide scaling of such objects/areas accordingly.

### Object of the Invention

The present invention relates to an entertainment system to overcome problems stated in prior arts and method for providing adaptive scaling of video frames displayed over display screen in relation with detected motion changes within consequent video frames.

Another object of present invention is to provide adaptive scaling of video frames displayed over display screen in relation with detected motion changes within consequent video frames and user preferences, various embodiments are disclosed.

## Description of Figures

**Figure-1** general overview of the prior art system
**Figure-2** a block diagram for illustrating the main principle of the invention
**Figure-3** a block diagram for summarizing the principle of view mode definition and constant scaling parameters determination
**Figure-4** a block diagram for representing scaling coefficients for an exemplary view mode," news"
**Figure-5** a block diagram for representing scaling coefficients for an exemplary view mode, "sports"

## Description of Invention

While watching a moving object within a displayed video, the moving part of the video is constantly followed by the human eye in order to perceive moving part of displayed video images better than stationary parts within the same video image; where the moving parts of the video are generally considered to be the centre of interest.

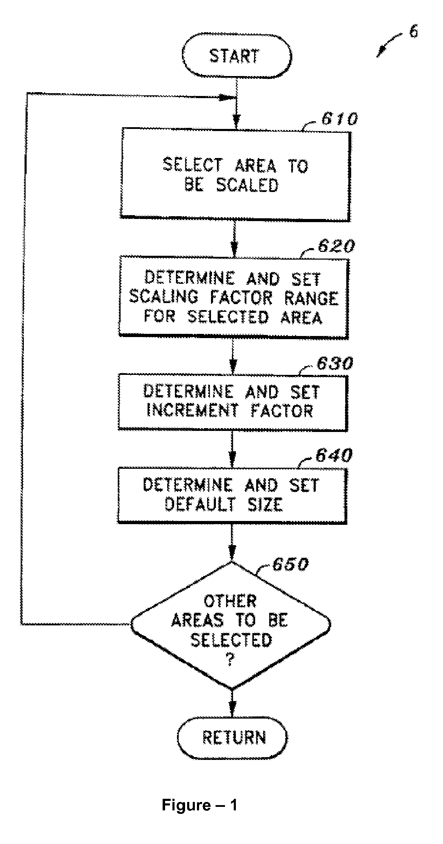

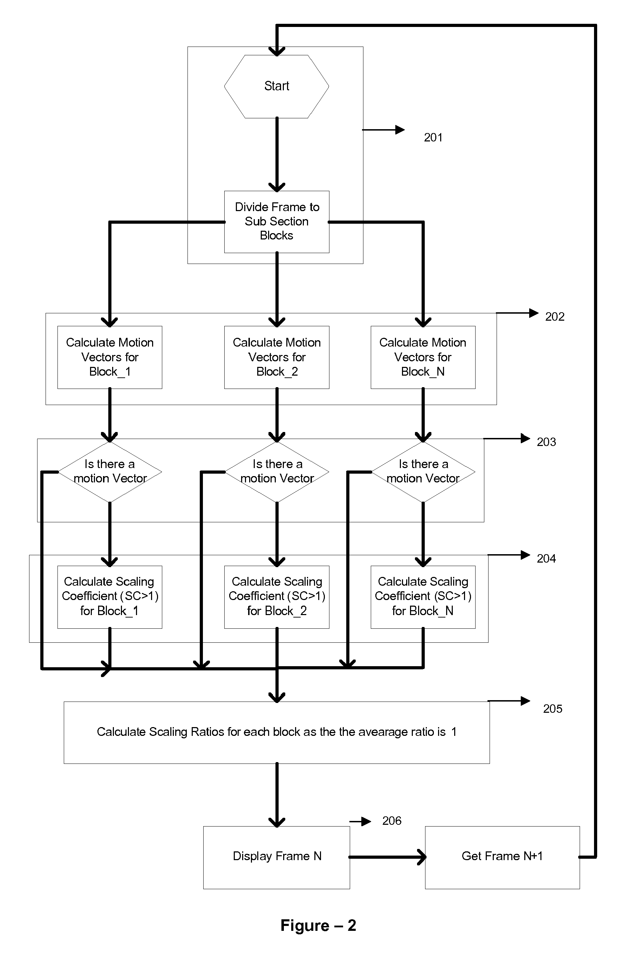

The main principle of the invention is illustrated referring to Figure 2 where; adaptive scaling of predefined fields over display screen in relation with detected motion changes within consequent video frames is provided. During detection of motion changes, a video to be displayed is supposed to have frame characteristic as ...N-2,N-1,N,N+1,N+2,N+3...where consequent frames forms the video to be displayed. In order to detect motion changes, it is a well known prior art to use luminance value, which value consist of main color components R(red),G(green) and B(blue) may be used to determine motion changes; where luminance changes refer to presence of motion within a video.

Figure 2 illustrates how a single frame (Nth frame) will be displayed over display system if adaptive scaling is activated by the features of the invention. At first step the video to be displayed is loaded to a buffer area (not shown in figure) in order to evaluate each frame a video to be displayed have. This buffer area may be a random access memory-RAM, or another memory location. According to the present invention, the Nth frame to be displayed is initially divided to subfields (sub blocks) in order to evaluate luminance within each field at step 201, the main reason to divide a frame to be displayed into subfields is to evaluate the luminance value of that frame subfield, and to make a comparison between present luminance value of that subfield with the luminance value of same subfield of previous frame(N-1 in this condition). After division of frame N into subfields, according to the present invention at step 202, the luminance value of previous frames are compared with luminance value of initial frames (for this example luminance value of (N-1)th frame and Nth frame are compared), this comparison may be performed in various ways.

One of the known prior art for motion detection is luminance comparison between subfields, as mentioned before. Within an LCD television receiver, subfields may be defined as pixel groups, for instance; a 8x8 pixel group may be considered to be a subfield, where a frame represented by 800x600 pixels will form 7500 subfield ((800x600)/(8x8)).The motion level in one subfield, 8x8 pixels, can be calculated with a simple approach by the below function;

$$Motion_{total} = \Sigma_{x,y=1}^{x,y=8} \sqrt{\left(M_{x,y} - (M-1)_{x,y}\right)^2}$$

Where M represents the luminance value, x and y represent the location of pixels within a subfield. By means of the above equation, the luminance change of one subfield of Nth and (N-1)th frame, and the luminance change within 64 pixels can be calculated, and motion is approximately calculated by means of evaluating the luminance difference for all subfields of Nth and (N-1)th frame (for this example 7500 subfields).

Motion detection in relation with luminance change detection at step 102 is performed by a microprocessor (not shown), motion detection based on luminance difference is a well known system in prior art, and motion detection for adaptive scaling may be performed in various ways; within the features of present invention; motion presence is determined if value of luminance changes exceed a predetermined threshold value; that threshold value is determined in the site of manufacturer and can be changed by user. The user may determine the sensitivity for activating the adaptive scaling automatically, for example the user may use a remote control for sending the sensitivity data to the entertainment system, and according to the invention the threshold level to activate adaptive scaling may be changed.

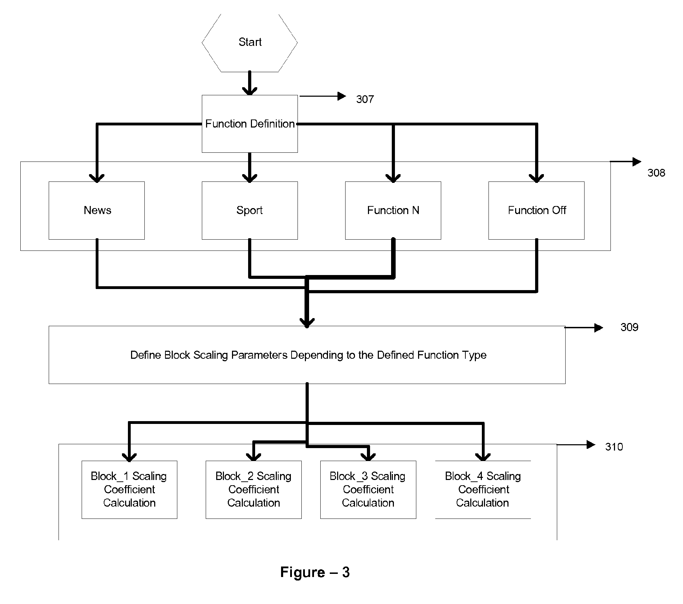

After determining the motion change between consequent frames, in order to determine the range of scaling, the scaling coefficients are calculated in relation with a scaling parameters determination rule, this process is summarized in 203,204,205 within Figure 2. According to the features of the present invention, in order to define constant scaling parameters, users are asked to define a view mode in order to automatically scale moving parts of a video frame in accordance with user preferences. Defining user preferences are explained within Figure 3 where; in order to define the subfield numbers to be evaluated during motion calculation within one frame, or in order to define the range of scaling, those modes are taken into consideration; at step 307 and 308, the users are asked to choose one of predefined view modes, if they intent to activate adaptive scaling. Those modes, and rules related to those modes are prepared in the site of manufacturer, and data related to scaling coefficients for view modes is loaded to a memory location within the display system. In accordance with user selections performed in step 307 and 308, the constant scaling parameters (scaling coefficients) are read from memory location within the display system by taking selected view mode decision at step 309 into consideration. According to user decisions made at step 307 and 308, scaling coefficients are loaded from a memory location within the display system and those coefficients are used within step 103 and 104 , where if motion presence is determined.

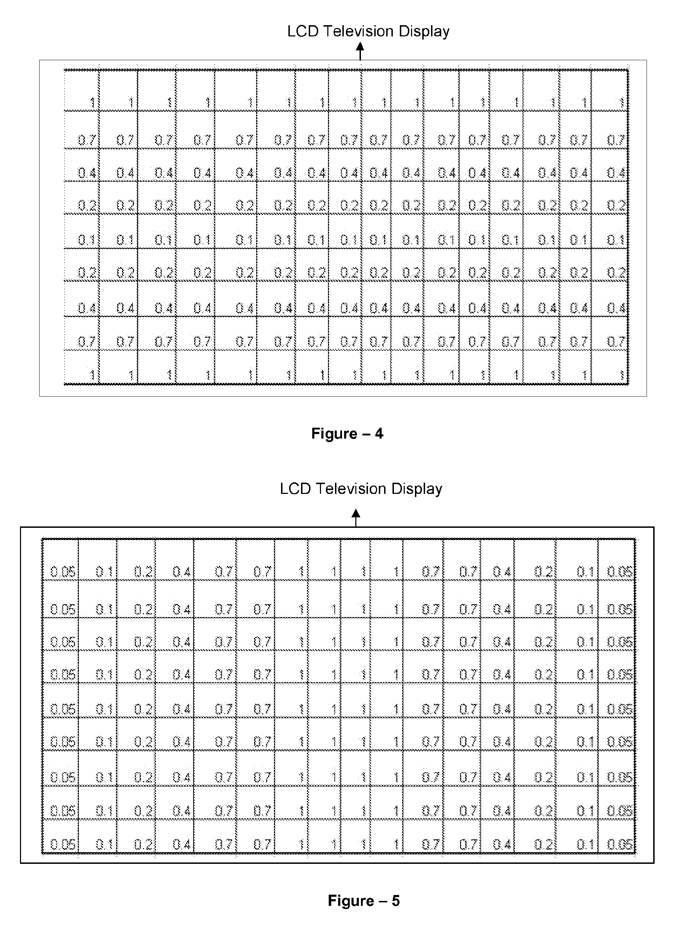

In accordance with selected view mode, some of subfields are scaled more, compared with other subfields at step 310 , if motion presence is detected within those subfields, the adaptive scaling operation is performed in relation with selected view mode. Examples regarding to how adaptive scaling varies in relation with selected view mode will be explained with Figure 4 and Figure 5 in details.

Figure 4 represent a subfield scaling coefficients table for selected view mode "news", where upper and lower side of video to be displayed has greater scaling coefficients compared to other subfields. The reason to use greater scaling coefficients for upper and lower side of video to be displayed is to adaptively scale a sliding subtitle, if there appears any. According to present invention, the frames to be displayed are divided into subfields and motion calculation is performed at step 202 and 203 by above mentioned methods. If the user defines a view mode in step 307 and 308, this selection is used in step 104; where video to be displayed is scaled adaptively with predefined scaling coefficients if a motion presence is detected. All scaling coefficients are evaluated in relation with selected view mode at step 105; according to the principle of the present invention, scaling coefficients (in relation with selected video modes) are used to adaptively scale the video to be displayed, if motion presence is determined. According to the features of the invention, a user enabling a view mode, for this example news mode, will see upper and lower side of video scaled more compared to other fields within the same video if a motion presence within the video is detected. The reason to upscale motion and user preference related subfields, and to downscale the other subfields in case of motion detection is to fit the whole video to be displayed to the display system.

Figure 5 represents a subfield scaling coefficients table for selected view mode "movie", where centre of the video to be displayed has greater scaling coefficients compared to other subfields. The reason to use bigger scaling coefficients for centre of frame to be displayed is to adaptively scale centre of the image, where centre of the image to be displayed is considered to be the centre of interest. According to present invention, if the user chooses a "movie" view mode in step 307 and 308, this selection is used in step 204; where scaling coefficients are evaluated in relation with selected view mode at step 205. According to the features of the invention, a user enabling a view mode, for this example movie mode, will observe centre of displayed video scaled more, compared to other areas of displayed video; if any motion presence is detected. The reason to upscale centre of video in presence of motion detection within a video to be displayed, and to downscale the other subfields within the video in this example (movie mode) is to fit the whole video to the display system.

By the features of the present invention, motion detection can be performed, and in case of a motion presence, a video to be displayed can adaptively be scaled with greater scaling ratios for user's centre of interest, which enable the user to view his/her centre of interest in an easier manner.

## Claims

1. A method for adaptive scaling of a video frame displayed by an entertainment system comprising;

   - means receiving user preference data to determine view mode
   - receiving a first video frame to be displayed within an entertainment system
   - comparing said first video frame with at least another video frame to detect motion presence, **characterized in that;**
   - in case of motion presence between said first video frame and said at least another video frame, adaptively scaling said first video frame in relation with determined view mode
   - displaying said first video frame within said entertainment system

2. A method according to claim 1 wherein; said comparing said first video frame with at least another video frame to detect motion presence comprises the steps of;

   - dividing each of said first video frame and at least another video frame into at least two subfields
   - detecting luminance value change between said at least two subfields
   - determining motion change presence in relation with detected luminance value change.

3. A method according to claim 1 wherein ; said view mode comprises scaling coefficients.

4. A method according to claim 1 or claim 3 wherein; said constant scaling coefficients are created in the site of manufacturer.

5. A method according to claim 1 wherein; said at least another video frame is a frame displayed before said first video frame.

_6_

START

_610_

SELECT AREA TO
BE SCALED

_620_

DETERMINE AND SET
SCALING FACTOR RANGE
FOR SELECTED AREA

_630_

DETERMINE AND SET
INCREMENT FACTOR

_640_

DETERMINE AND SET
DEFAULT SIZE

_650_

OTHER
AREAS TO BE
SELECTED
?

RETURN

**Figure – 1**

Start

Divide Frame to
Sub Section
Blocks

201

| Calculate Motion Vectors for Block_1 | Calculate Motion Vectors for Block_2 | Calculate Motion Vectors for Block_N |

202

| Is there a motion Vector | Is there a motion Vector | Is there a motion Vector |

203

| Calculate Scaling Coefficient (SC>1) for Block_1 | Calculate Scaling Coefficient (SC>1) for Block_2 | Calculate Scaling Coefficient (SC>1) for Block_N |

204

Calculate Scaling Ratios for each block as the the avearage ratio is 1

205

Display Frame N

206

Get Frame N+1

**Figure – 2**

Start

Function Definition → 307

News | Sport | Function N | Function Off → 308

Define Block Scaling Parameters Depending to the Defined Function Type → 309

→ 310

Block_1 Scaling Coefficient Calculation | Block_2 Scaling Coefficient Calculation | Block_3 Scaling Coefficient Calculation | Block_4 Scaling Coefficient Calculation

**Figure – 3**

LCD Television Display

| 1 | 1 | 1 | 1 | 1 | 1 | 1 | 1 | 1 | 1 | 1 | 1 | 1 | 1 | 1 | 1 |
|---|---|---|---|---|---|---|---|---|---|---|---|---|---|---|---|
| 0.7 | 0.7 | 0.7 | 0.7 | 0.7 | 0.7 | 0.7 | 0.7 | 0.7 | 0.7 | 0.7 | 0.7 | 0.7 | 0.7 | 0.7 | 0.7 |
| 0.4 | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 |
| 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 |
| 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| 0.4 | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 |
| 0.7 | 0.7 | 0.7 | 0.7 | 0.7 | 0.7 | 0.7 | 0.7 | 0.7 | 0.7 | 0.7 | 0.7 | 0.7 | 0.7 | 0.7 | 0.7 |
| 1 | 1 | 1 | 1 | 1 | 1 | 1 | 1 | 1 | 1 | 1 | 1 | 1 | 1 | 1 | 1 |

**Figure – 4**

LCD Television Display

| 0.05 | 0.1 | 0.2 | 0.4 | 0.7 | 0.7 | 1 | 1 | 1 | 1 | 0.7 | 0.7 | 0.4 | 0.2 | 0.1 | 0.05 |
|---|---|---|---|---|---|---|---|---|---|---|---|---|---|---|---|
| 0.05 | 0.1 | 0.2 | 0.4 | 0.7 | 0.7 | 1 | 1 | 1 | 1 | 0.7 | 0.7 | 0.4 | 0.2 | 0.1 | 0.05 |
| 0.05 | 0.1 | 0.2 | 0.4 | 0.7 | 0.7 | 1 | 1 | 1 | 1 | 0.7 | 0.7 | 0.4 | 0.2 | 0.1 | 0.05 |
| 0.05 | 0.1 | 0.2 | 0.4 | 0.7 | 0.7 | 1 | 1 | 1 | 1 | 0.7 | 0.7 | 0.4 | 0.2 | 0.1 | 0.05 |
| 0.05 | 0.1 | 0.2 | 0.4 | 0.7 | 0.7 | 1 | 1 | 1 | 1 | 0.7 | 0.7 | 0.4 | 0.2 | 0.1 | 0.05 |
| 0.05 | 0.1 | 0.2 | 0.4 | 0.7 | 0.7 | 1 | 1 | 1 | 1 | 0.7 | 0.7 | 0.4 | 0.2 | 0.1 | 0.05 |
| 0.05 | 0.1 | 0.2 | 0.4 | 0.7 | 0.7 | 1 | 1 | 1 | 1 | 0.7 | 0.7 | 0.4 | 0.2 | 0.1 | 0.05 |
| 0.05 | 0.1 | 0.2 | 0.4 | 0.7 | 0.7 | 1 | 1 | 1 | 1 | 0.7 | 0.7 | 0.4 | 0.2 | 0.1 | 0.05 |
| 0.05 | 0.1 | 0.2 | 0.4 | 0.7 | 0.7 | 1 | 1 | 1 | 1 | 0.7 | 0.7 | 0.4 | 0.2 | 0.1 | 0.05 |

**Figure – 5**

Europäisches
Patentamt

European
Patent Office

Office européen
des brevets

## EUROPEAN SEARCH REPORT

Application Number

EP 09 15 2348

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/095477 A1 (MAKI TAKASHI [JP] ET AL) 20 May 2004 (2004-05-20)<br>* paragraphs [0029] - [0035], [0096], [0079] *<br>----- | 1-5 | INV.<br>H04N5/44<br>G06T3/40 |
| X | US 2005/151884 A1 (OH KEUM-YONG [KR]) 14 July 2005 (2005-07-14)<br>* claims 1-3 *<br>----- | 1-5 | |
| X | US 2003/122853 A1 (KIM JEONG WOO [KR]) 3 July 2003 (2003-07-03)<br>* claims 1,2 *<br>----- | 1-5 | |
| X | EP 1 848 203 A (VESTEL ELEKTRONIK SANAYI VE TI [TR]) 24 October 2007 (2007-10-24)<br>* the whole document *<br>----- | 1-5 | |
| X | US 2007/147708 A1 (LEE YOUNG-HO [KR]) 28 June 2007 (2007-06-28)<br>* the whole document *<br>----- | 1-5 | |
| | | | TECHNICAL FIELDS SEARCHED (IPC)<br><br>H04N<br>G06T<br>H04M |

The present search report has been drawn up for all claims

| Place of search | Date of completion of the search | Examiner |
|---|---|---|
| Munich | 12 May 2009 | Thieme, Markus |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
 
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 09 15 2348

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2009

| Patent document cited in search report | | Publication date | Patent family member(s) | | Publication date |
|---|---|---|---|---|---|
| US 2004095477 | A1 | 20-05-2004 | CN | 1496110 A | 12-05-2004 |
| | | | JP | 3966461 B2 | 29-08-2007 |
| | | | JP | 2004072655 A | 04-03-2004 |
| US 2005151884 | A1 | 14-07-2005 | KR | 20050073016 A | 13-07-2005 |
| US 2003122853 | A1 | 03-07-2003 | CN | 1430415 A | 16-07-2003 |
| | | | GB | 2384937 A | 06-08-2003 |
| | | | KR | 20030058143 A | 07-07-2003 |
| EP 1848203 | A | 24-10-2007 | NONE | | |
| US 2007147708 | A1 | 28-06-2007 | CN | 1991971 A | 04-07-2007 |

EPO FORM P0459

For more details about this annex : see Official Journal of the European Patent Office, No. 12/82

**EP 2 088 774 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020075318 A